# EUROPEAN PATENT SPECIFICATION

(11) **EP 2 490 439 B1**
(45) Date of publication and mention of the grant of the patent: **03.07.2013**
(21) Application number: 11155045.5
(22) Date of filing: 18.02.2011
(51) Int. Cl.: H04N 5/235, G08B 13/196

(54) **Illumination device for a monitoring camera**
Beleuchtungsvorrichtung für eine Überwachungskamera
Dispositif d'éclairage pour caméra de surveillance

(43) Date of publication of application: 22.08.2012
(73) Proprietor: Axis AB, 223 69 Lund (SE)
(72) Inventor: Gustafsson, Christian, 223 69 Lund (SE); Dahlqvist, Christian, 223 69 Lund (SE)
(74) Representative: Bratt, Hanna Catharina

(56) References cited:
- US-A1- 2006 238 617
- US-A1- 2008 151 052
- US-A1- 2009 116 210
- US-A1- 2009 147 153
- US-A1- 2010 128 162

## Description

### Technical field

The present invention relates to an illumination device for illuminating a scene monitored by a camera, and to a method of illuminating a scene monitored by a camera.

### Background art

Surveillance cameras used to monitor a specific setting may from time to time need additional lighting to be able to give a good picture of the environment that they are used to monitor. This is for instance the case during night time in an outdoor setting when the natural light is insufficient for the camera. Some type of lighting can then be used in combination with the surveillance camera. A common choice is to use light emitting diodes, LEDs, emitting infrared or white light, for illuminating the scene which is monitored by the surveillance camera. The LEDs may be mounted in external units or can be integrated in the camera housing or the camera's mechanical structure.

When such additional lighting, e.g. in the form of LEDs, is integrated in the camera it can provide a more simple installation process for the user. This since no lighting equipment needs to be installed separately. This can in turn reduce the installation costs. It is also easier to ensure that the illumination is properly directed in the line of sight of the camera. However, a problem when using integrated LEDs is that they tend to generate a lot of heat, which in turn may have a negative impact on the performance of the image sensor in the camera. The LEDs also tend to consume a considerable amount of power which increases the power consumption of the camera.

Another issue is that the illumination provided by camera integrated LEDs or external LEDs is often not reconfigurable or adaptable when the installation has been finished without physically replacing the LED units. Instead, prior to the actual installation of the surveillance camera, a proper range of the illumination to match the imaging conditions in the installations needs to be chosen, and this can be a cumbersome task requiring a lot of effort in some cases. This is often what is done when installing a fixed focus camera, having fixed imaging settings of the optics during operation.

However, in a varifocal camera, it is not feasible to the same extent to choose a setting for the lighting beforehand, as these cameras alter the focus and/or zoom position dynamically during operation. A LED unit that has a large range, in order to cover all possible distances of interest for the particular camera during operation, is often chosen for varifocal cameras. However, this results in larger power consumption as well as more heat generation than necessary for most of the operation time.

The problems with the excessive heat generation and power consumption may be reduced if lighting can be controlled to match the camera's need of light.

In DE 3622025 an infrared lighting for a TV camera is disclosed which includes a number of infrared diodes. The intensity of radiation from the infrared lighting can be controlled by changing the constant voltage driving the lighting.

However, in that known solution, the light from the diodes are always provided to a large area and cannot be adapted to the area or object that is in focus of the camera. Therefore, there is a need for an illumination solution in which the problems regarding heat generation and power consumption are reduced by controlling the optical output of the LEDs to efficiently match the need for illumination of the camera and specific use case.

US 2009/0116210 discloses an adaptive illumination device with at least one lighting panel bearing an array of light emitters and control means for selectively energizing predetermined groups of light emitters within the array in response to control signals so as to illuminate a predetermined part of a scene.

US 2006/0238617 discloses a night vision surveillance system having an laser illuminator with a collimator for controlling the beam divergence angle.

US 2008/0151052 discloses an infrared surveillance system with a first infrared light source mounted on a first panel and a second infrared light source mounted on a second panel. The illumination field of the light sources may be varied by adjusting the position of one panel in relation to the other panel.

### Summary of the invention

It is an object of the present invention to provide an illumination solution that alleviates the above problems regarding heat generation and power consumption, and to provide an illumination solution where the optical output of an illumination device may be efficiently controlled to match the need for illumination of the camera and specific use case.

This and further objects are achieved by a monitoring camera having the features as defined in claim 1, preferred embodiments being defined in the dependent claims. According to embodiments of the invention, the monitoring camera comprises an illumination device for illuminating a scene monitored by the camera which comprises a first light emitting source having a first lens arranged to create an illumination pattern in the form of a frame, and a second light emitting source having a second lens arranged to create an illumination pattern (11) filling the area within the frame. The output intensity of the first and the second light emitting source is individually controllable.

This makes it possible to adapt the illumination provided so that illumination of an object located at a variable distance from the camera is achieved. At the same time the heat generation and power consumption is lowered by more efficient use of the light emitted from light emitting sources.

The illumination device may be arranged to provide an essentially even illumination of an object, which can improve the image quality for the camera.

In this manner essentially even illumination of an object is easily achieved at several distances, and it is also possible to provide illumination essentially within an area of a certain size, which in turn can create further power saving and further reduction in heat generation, as well as giving further improvements in the image quality. The frame could be either ring shaped or rectangular.

The first and the second light emitting source may each comprise an LED, which may be adapted to emit IR-radiation. This is especially useful in a night time imaging environment. The illumination device may be arranged to receive a zoom range value from the camera and to use the received zoom range value for controlling the output intensity of the first and the second light emitting source so that essentially even illumination is provided of an object located at a distance from the camera corresponding to the zoom range value. This makes it possible to ensure proper illumination in a power efficient manner to the object being in focus for the camera.

As an alternative, the illumination device may be connected to a user input interface and arranged to receive a third distance from the user input interface, and to use the third distance for controlling the output intensity of the first and the second light emitting source so that essentially even illumination is provided of an object present at the third distance from the camera. This makes it possible to set the illumination for a fixed focus camera in a user-friendly manner. It is also easy to change the illumination settings after putting the camera in place, should that be needed.

As a further alternative, the illumination device may be arranged to receive, from the camera, information regarding an actual intensity of light at a fourth distance from the illumination device, as well as information regarding a desired intensity of light at the fourth distance, and, based on the received information, adapting the output intensity of the light emitting sources.

In this manner a feed back to the illumination device is created which makes it possible to even more precisely adapt the illumination to the needs of the camera.

### Brief description of the drawings

The invention will now be described in more detail by way of example and with reference to the accompanying schematic drawings, in which:
Fig. 1 shows a camera monitoring a scene.
Fig. 2 shows a detailed schematic of an exemplary illumination device.
Fig. 3 illustrates how the illumination device in Fig. 2 is used when illuminating objects.
Fig. 4 shows a detailed schematic of another exemplary illumination device.
Fig. 5 illustrates the illumination device in Fig. 4 when illuminating objects at different distances.
Fig. 6 shows a flowchart of a method of illuminating a scene.
Fig. 7 shows a flowchart of another method of illuminating a scene.

### Detailed description of the invention

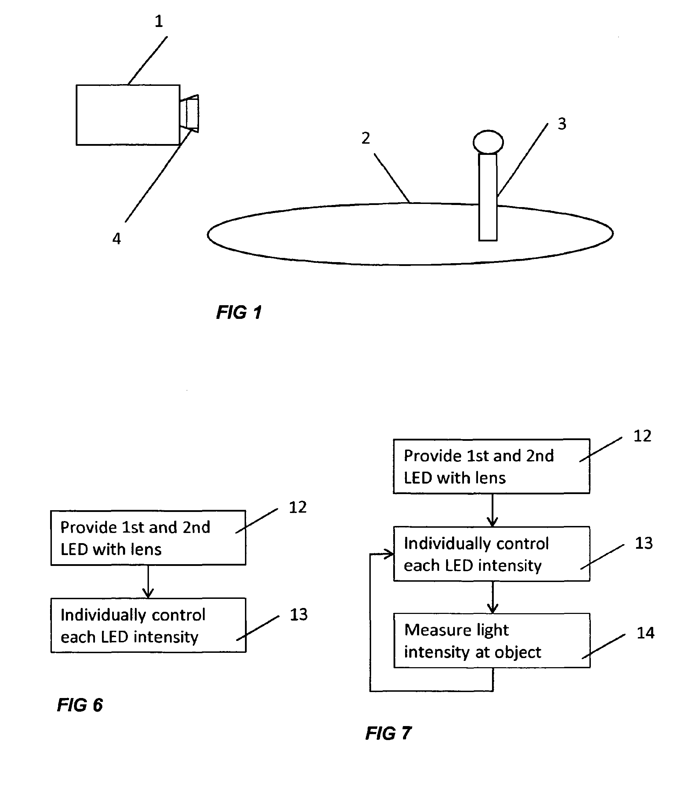

A camera 1 monitors a scene 2, where objects 3 may appear. The camera 1 can be a fixed focus surveillance camera, or a varifocal surveillance camera, which is able to adapt its focus to objects at varying distances from the camera. In the case of a varifocal camera, this may or may not have zooming capabilities, and the zoom may be either manually or electrically controlled. The camera may further be either fixed or movable in a pan/tilt fashion. The camera 1 is connected to an illumination device 4, which e.g. can be integrated in the camera 1, or mounted externally to the camera 1. The camera 1 and the illumination device 4 may be connected by cable or by a wireless connection, and in addition they may be directly connected or connected via a network. In Fig. 1 the illumination device 4 is shown mounted in the housing of the camera 1.

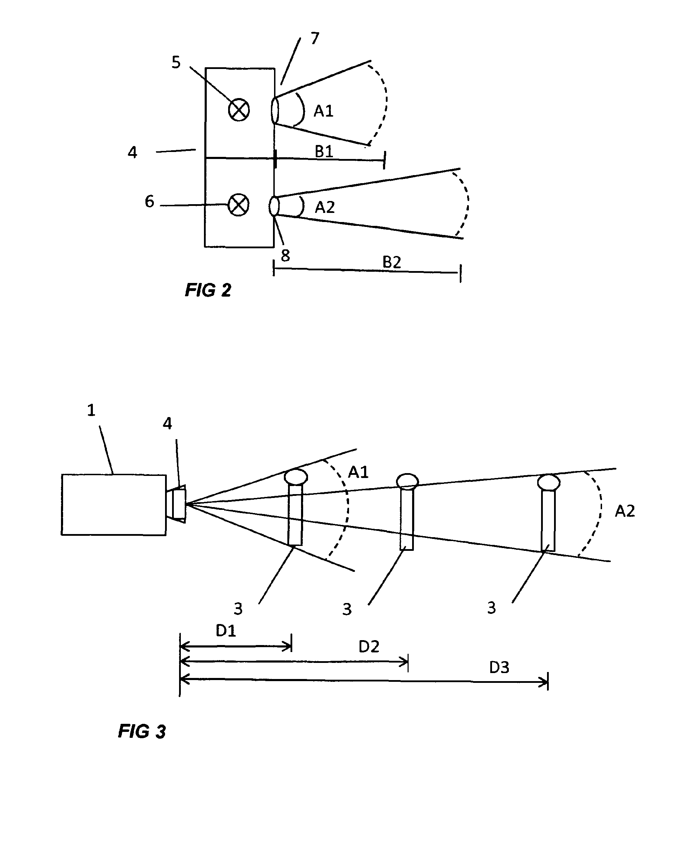

A schematic illumination device 4 is shown in Fig. 2 which includes two LED units 5 and 6, each mounted so that the emitted light from the LED unit passes through a respective lens 7 and 8. The illumination device may contain more than two LED units each having a respective lens, in order to even further adapt the illumination to the needs of the camera 1, Note that Fig. 2 is not to scale for purposes of clarity. The lenses 7, 8 each define a divergence angle A1 and A2 for the light emitted from the LED units 5, 6. The intensity of the light emitted from the LED units 5 and 6 can be controlled by controlling the power fed to the LED units 5, 6. This in turn controls the approximated lengths B1 and B2 of the illumination cones for the LED units 5 and 6, in this case meaning the distance at which each LED unit gives a desired light intensity, measured e.g. in mWFlux, per area unit. As an example, 10mWFlux/m², might be a desired light intensity, and the length of the illumination cone is then defined as the distance at which that LED unit gives that light intensity per area unit.

In other words, the divergence angle A1, A2 of each LED unit 5, 6 depends on the optical characteristics of the respective lens 7, 8 and the length B1, B2 of the illumination cone depends on the output intensity of the respective LED unit 5, 6. In this example, the divergence angle A1 of the LED unit 5 is larger than the divergence angle A2 of the other LED unit 6. The illumination range of LED unit 5 is defined by the length B1 of the illumination cone and the divergence angle A1. Correspondingly, the illumination range of LED unit 6 is defined by the length B2 of the illumination cone and the divergence angle A2.

As an example, in a camera 1 having zoom capabilities, the lenses 7 and 8 may be designed or selected so that the first LED 5 and the first lens 7 evenly illuminates a full figure person fitting in the view of the camera 1 when the zoom lens of the camera 1 is fully zoomed out, and the distance to that person is then equal to B1. The second lens 8 and the second LED 6 are designed to evenly illuminate a full figure person fitting in the view of the camera 1 when the zoom lens of the camera 1 is fully zoomed in. The distance to that person is then equal to B2.

Different types of LEDs or other light emitting sources may be used in the illumination device 4. A common choice, e.g. to be used together with a camera 1 used during night time and adapted for infrared photography, would be LEDs emitting light in the infrared or more specifically the near-infrared (∼850 nm) spectrum, but white light LEDs may also be used.

Going more into detail of an exemplifying embodiment of the illumination device 4, Fig. 3 schematically shows how the illumination device 4 of Fig. 2 can be used to illuminate objects 3, located at different distances D1, D2 and D3, from the camera 1. As the inventors have realized, illumination is primarily needed for the area or object that is in focus of the camera 1 and not necessarily for the background of the scene 2 monitored by the camera 1. When using a camera 1 with zoom capabilities, the objects 3 have approximately the same size, meaning that the area which needs to be illuminated also has the approximate same size, seen from the camera, independent of the distance between the camera 1 and the respective object 3. In other words, the size of the area that needs to be illuminated is constant for a certain object 3. This as a camera with zoom may follow the object 3 as it moves away from the camera 1. Hence, the size of the object 3 seen by the camera 1 is approximately constant and so is the needed illumination area.

The object 3 at a distance D1, which is shown in Fig. 3 as being relatively close to the camera 1, may be illuminated by feeding the LED unit 5, having the larger divergence angle A1, with enough input power to cover a range which illuminates the object 3 at the distance D1, and LED unit 6 with no input power. If there instead is an object 3 at a distance D3, which is further away from the camera 1, this may be illuminated by feeding LED unit 6, having the smaller divergence angle A2, with enough input power to give a suitable range to illuminate object 3 at the distance D3. LED unit 5 is in this case not fed any power. It may be noted that the size of the illuminated area at distance D3 and at distance D1 is essentially the same, which means that at these distances an object 3 is illuminated in essentially the same way meaning the same size and intensity of light falls on the object 3. In Fig. 3, one may assume that objects 3 usually appear at distances from the camera 1 in the range between D1 and D3.

In some cases the illumination range from several LED units may be combined to create a total illumination range which matches the imaging conditions of the camera 1.

This is the case for an object 3 which is located at a distance D2 between distance D1 and D3. In this case light from both LED units 5 and 6 is used to illuminate the object 3, and for example 50% of the maximum operating input power of each LED unit might be used.

The input power control to the LED units 5 and 6 may be performed by having an "on" and "off" state for each LED or by adjusting the input power continously or in several digital steps, e.g. 0%, 25%, 50%, 75% and 100% of the maximum input power to the respective LED unit 5, 6. This in turn means that the illumination for a particular imaging setting of the camera 1 or a particular use case can be tailored by controlling the input power of the different LED units 5, 6. The LED unit or units that provide an illumination range which is not needed for the particular imaging conditions of the camera 1 is not powered. This reduces both the heat generation and power consumption compared to the case where all LED units are powered all the time. When combining a number of LEDs for illuminating an object, the risk of heat related performance issues will be lowered, and the eneregy efficiency will be improved. The latter since generally an LED needs more power the warmer it gets, which means that it is more energy efficient to combine two LEDs at 50% of their maximum power than to use one LED at 100% of its power.

Combining a number of LEDs and lenses in the illumination device also has the advantage of making it possible to tailor the illumination to the needs in a specifc situation.

The illumination device 4 can be used to dynamically match the illumination to the imaging conditions during operation, but also to, in a simple and efficient way, choose a proper illumination when a camera 1 is configured and installed. It is also easy to change the illumination setting of a camera 1 once in place, without any need to replace the LED units. As an example, the zoom value of an electrically zoomable camera's imaging lens can be used as an input parameter to control the input power to the LED units 5 and 6. As another example, the illumination range - or the (expected) distance to an object 3 - can be set by a user in a user interface, e.g a user interface of a fixed focus camera. Another option is to use advanced image processing to calculate the distance to the focal plane, and from that the optimal lighting settings, and then control the illumination device 4 accordingly. In one embodiment the zoom value is in a first step used to select which LED (s) to activate and in this way define the angle of the illumination. In a second step the distance to the focal plane is used to control the input power to the LEDs and in this way define the intensity of the illumination.

As a further example, the actual light intensity measured by the camera 1 at a certain distance may be compared with the desired light intensity at that distance and the result may be used to adapt the power fed to the LEDs.

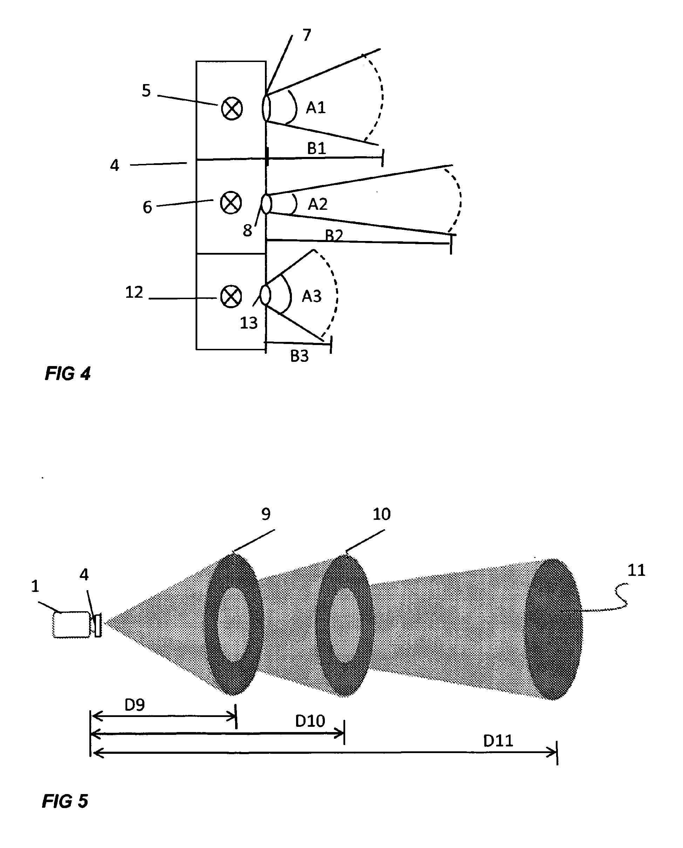

As shown in Fig. 4 and 5, advanced lens technology for creating illumination patterns other than circular symmetric cones of illumination can be used. The lens 7 shown in Fig. 4 of the illumination device 4 may in this example be designed so that the LED unit 5 illuminates only parts of the periphery of the scene viewed by the camera 1, i.e. the lens 7 is designed to provide a frame shaped illumination pattern 10, while the second lens 8 may be designed so that the light emitted from the LED unit 6 falls within that frame shape 10 in an essentially circular shape or pattern 11. In this manner an efficient usage of the LED units is achieved. As shown in Fig. 4 this is further enhanced by adding a third LED unit 12 within the illumination device 4, having a lens 13 that gives a divergence angle A3 which is even larger than the one for LED 5 and that creates a frame-shaped illumination pattern 9, in turn surrounding the illumination frame 10. The illumination range of LED 12 is defined by the length of the illumination cone B3 (i.e. the distance at which the LED gives a certain light intensity per area) and the divergence angle A3.

It may be noted that the whole setup may also be implemented using lenses that create other shapes than circular, e.g rectangular shapes or patterns may be useful in some instances. Another option is to use a Bresel type of frame, i.e. a frame shape where the inner sides are convex in relation to a frame centrepoint. Other shapes or patterns may also be used, depending on what is needed for creating an appropriate illumination setting for the camera.

It may be noted that the lenses in the example of fig 4 and fig 5 are designed so that the size of the illuminated area at given distances from the camera 1 is essentially the same. In Fig. 5, this is the case at distances D9, D10 and D11, where the combination of the three LEDs 5, 6 and 12 gives an evenly illuminated area of essentially the same size when combined. In Fig. 5, the illumination cones of each of the LED units 5, 6 and 12 are shown when the LED units 5, 6 and 12 are fed such an amount of power that the diameter of the illumination cone is equal for all three LEDs 5, 6 and 12, or in other words, light of a certain intensity per area unit from each LED 5, 6 or 12 is provided essentially within an area of a predetermined size. This is only for illustrational purposes, and in a real situation the LEDs 5, 6 and 12 used will be fed power so that their illumination cones reach an object at one and the same distance. As an example, to illuminate an object at distance D11 from the camera 1, only the LED 6 creating the illumination pattern 11 is fed power, and then to such an amount that the illumination cone from LED 6 gives a desired light intensity (e.g. measured in mWFlux per area unit) at distance D11 to evenly illuminate the object at that distance. This could e.g. be when the LED 6 is fed 100% of the total power.

As another example, at the distance D10, the LED 5 with the illumination pattern 10 and the LED 6 with the illumination pattern 11, are both fed power to be lit to such an amount that their illumination cones reaches and in an essentially even manner illuminates an object at distance D10. Essentially even illumination may in this context be interpreted as providing an illumination of the object which gives the camera a possibility to create a recognizable picture of the object, without overexposed or underexposed parts to such an extent that these parts makes it difficult to identify the object. This could for instance be when LED 5 with the illumination pattern 10 is lit at 100% of its maximum rated input power and LED 6 with the illumination pattern 11 is lit at 50%. The LED creating the illumination pattern 9 is not needed in this situation and is not fed any power. The LED 6 will then illuminate the inner part of the total illumination pattern at distance D10 and the LED 5 will illuminate the peripheral parts. In combination they give an even illumination of the object at that distance.

In a final example, an object at distance D9 may be evenly illuminated by combining all three LEDs 5, 6 and 12. The LED 6, with the illumination pattern 11 will then be fed, say, 25% of the power, the LED 5 with the illumination pattern 10 will be fed 75%, and the LED 12 creating the illumination pattern 9 will be fed 100% of its maximum power. This will in total create an even illumination of an object located at the distance D9.

By using a number of LEDs and lenses that create illumination frames surrounding an inner illumination shape, it is possible to provide an even illumination within an area that has approximately the same size at different distances from the camera. In the example shown in Fig. 4 and 5, three LEDs and lenses are used, but any number of LEDs and lenses could be used, as suits the situation at hand. At each distance the amount of power fed to each LED to give an even illumination at that distance is calculated, either on the fly, or in advance In the latter case the power settings for the LEDs may be stored in a table in some type of memory within or connected to the illumination device.

It may be noted that some light obviously might fall outside the shapes or patterns provided by the lenses, but it is reasonable to assume that a main part, say at least 80%, of the light from the LEDs will fall within an area of a predetermined size, at a given distance. It may be noted that it may be preferred if the centre points of the different illumination patterns or shapes created by the LEDs and lenses at least approximately have a common axis, i.e. that the central axes of the light cones from the LEDs are essentially aligned with each other to create an even illumination. Additionally, one may note that the areas illuminated by the LEDs are essentially or approximately parallell to each other.

In Fig. 6 a flow chart describing a method of illuminating a scene according to embodiments of the present invention is shown. In step 12 the first and second light emitting source, in the flowchart the term LED is used, but other light sources may also be used, is provided. The light emitting sources each have lenses arranged so that the first light emitting source at a first distance D1 from the illumination device, provides illumination essentially within a first area of a predetermined size, and the second light emitting source, at a second distance D3 from the illumination device, provides illumination essentially within a second area of the predetermined size. In step 13 the output intensity of the first and the second light emitting source is individually controlled to give a desired illumination. As is shown in Fig. 7, in an optional step 14, the camera 1 may measure the intensity of light at an object at a certain distance, and compare this to a desired light intensity, and this information may then be fed back to control the light emitting sources in step 13.

The method and the illumination device according to embodiments of the invention may as mentioned above be useful in many different types of cameras. In cameras with a fixed focus lenses, a more user friendly way to install and set up the illumination is provided. The light intensity of the illuminated area may easily be controlled, e.g. via a graphical or other type of user interface, which could be provided at the camera.

In cameras having varifocal, non-zoomable lenses, embodiments of the invention may be used to control the intensity of the illumination according to the focus of the camera, e.g. to address over-exposure at short distances. The adjustment may be made based on the distance from the camera to the focal plane, which may be manually entered in a user interface or calculated via image processing.

In zoom cameras being either those with optical zoom having zoomable lenses, as described previously, or those with digital zoom or those having a combination of the two it would be possible, as described previously, to let the adjustment of the illumination intensity follow a zoom and/or focus value so that proper illumination at the distance to which the camera lens is zoomed in or out is provided.

Finally, in cameras having pan or tilt functionality, embodiments of the inventions could also be useful. The light sources may be placed within the movable part of the camera. When the pan/tilt camera follows a guard tour, the field of view is fully illuminated. However, if a specific object is found, the illumination may then be concentrated to a certain spot and increase the illumination there, the trade off being that the periphery of the entire image now will have darker areas. The object of interest will be illuminated in an essentially even way. Alternatively the light sources may be placed on the fixed part of the camera and the illumination angle is controlled based on the viewing direction of the camera. The illumination intensity is, as earlier described, controlled by the zoom value and the distance to the focal plane.

## Claims

1. A monitoring camera comprising an illumination device for illuminating a scene (2) monitored by the camera (1), the illumination device (4) comprising
a first light emitting source (5) having a first lens (7) arranged to create an illumination pattern in the form of a frame (9;10), and
a second light emitting source (6) having a second lens (8) arranged to create an illumination pattern (11) filling the area within the frame,
wherein the output intensity of the first and the second light emitting source (5,6) is individually controllable.

2. The monitoring camera of claim 1, wherein the illumination device (4) is arranged to provide an essentially even illumination of an object (3).

3. The monitoring camera of claim 1 or 2, wherein the first lens (7) is arranged to create a ring-shaped illumination pattern (10).

4. The monitoring camera of claim 1 or 2, wherein the first lens (7) is arranged to create a rectangular frame shaped illumination pattern.

5. The monitoring camera of any of the preceding claims, wherein the first and the second light emitting source (5,6) each comprises an LED.

6. The monitoring camera of any of the preceding claims, wherein the first and the second light emitting source (5,6) are adapted to emit IR-radiation.

7. The monitoring camera of any of the preceding claims, wherein the illumination device (4) is arranged to receive a zoom range value from the camera (1) and to use the received zoom range value for controlling the output intensity of the first and the second light emitting source (5,6) so that essentially even illumination is provided of an object at a distance from the camera (1) corresponding to the zoom range value.

8. The monitoring camera of any of claims 1-6, wherein the illumination device (4) is connected to a user input interface and is arranged to receive a third distance from the user input interface, and to use the third distance for controlling the output intensity of the first and the second light emitting source (5,6) so that essentially even illumination is provided of an object at the third distance from the camera.

9. The monitoring camera of any of claims 1-8, wherein the illumination device is arranged to receive, from the camera (1), information regarding an actual intensity of light at a fourth distance from the illumination device (4), as well as information regarding a desired intensity of light at the fourth distance, and, based on the received information, adapt the output intensity of the light emitting sources (5,6).

## Patentansprüche

1. Überwachungskamera, umfassend eine Beleuchtungsvorrichtung zum Beleuchten einer Szene (2), die von der Kamera (1) überwacht wird, wobei die Beleuchtungsvorrichtung (4) Folgendes umfasst:
eine erste Licht emittierende Quelle (5), die eine erste Linse (7) aufweist, die angeordnet ist, um ein Beleuchtungsmuster in Form eines Rahmens (9; 10) zu erstellen, und
eine zweite Licht emittierende Quelle (6), die eine zweite Linse (8) aufweist, die angeordnet ist, um ein Beleuchtungsmuster (11) zu erstellen, das die Fläche innerhalb des Rahmens ausfüllt,
wobei die Ausgangsintensität der ersten und der zweiten Licht emittierenden Quelle (5, 6) individuell steuerbar ist.

2. Überwachungskamera nach Anspruch 1, wobei die Beleuchtungsvorrichtung (4) angeordnet ist, um eine im Wesentlichen einheitliche Beleuchtung eines Objekts (3) bereitzustellen.

3. Überwachungskamera nach Anspruch 1 oder 2, wobei die erste Linse (7) angeordnet ist, um ein ringförmiges Beleuchtungsmuster (10) zu erstellen.

4. Überwachungskamera nach Anspruch 1 oder 2, wobei die erste Linse (7) angeordnet ist, um ein Beleuchtungsmuster in Form eines rechteckigen Rahmens zu erstellen.

5. Überwachungskamera nach einem der vorhergehenden Ansprüche, wobei die erste und die zweite Licht emittierende Quelle (5, 6) jeweils eine LED umfassen.

6. Überwachungskamera nach einem der vorhergehenden Ansprüche, wobei die erste und die zweite Licht emittierende Quelle (5, 6) dazu geeignet sind, um eine IR-Strahlung zu emittieren.

7. Überwachungskamera nach einem der vorhergehenden Ansprüche, wobei die Beleuchtungsvorrichtung (4) angeordnet ist, um einen Brennweitenbereichswert von der Kamera (1) zu empfangen und um den empfangenen Brennweitenbereichswert zum Steuern der Ausgangsintensität der ersten und der zweiten Licht emittierenden Quelle (5, 6) zu verwenden, so dass eine im Wesentlichen einheitliche Beleuchtung eines Objekts in einem Abstand von der Kamera (1) bereitgestellt wird, der dem Brennweitenbereichswert entspricht.

8. Überwachungskamera nach einem der Ansprüche 1 bis 6, wobei die Beleuchtungsvorrichtung (4) an eine Benutzereingabeschnittstelle angeschlossen ist und angeordnet ist, um einen dritten Abstand von der Benutzereingabeschnittstelle zu empfangen, und um den dritten Abstand zu verwenden, um die Ausgangsintensität der ersten und der zweiten Licht emittierenden Quelle (5, 6) zu steuern, so dass eine im Wesentlichen einheitliche Beleuchtung eines Objekts in dem dritten Abstand von der Kamera bereitgestellt wird.

9. Überwachungskamera nach einem der Ansprüche 1 bis 8, wobei die Beleuchtungsvorrichtung angeordnet ist, um von der Kamera (1) Informationen über eine tatsächliche Lichtintensität in einem vierten Abstand von der Beleuchtungsvorrichtung (4) sowie Informationen über eine gewünschte Lichtintensität in einem vierten Abstand zu empfangen, und basierend auf den empfangenen Informationen, die Ausgangsintensität der Licht emittierenden Quellen (5, 6) anzupassen.

## Revendications

1. Caméra de surveillance comprenant un dispositif d'éclairage pour éclairer une scène (2) surveillée par la caméra (1), le dispositif d'éclairage (4) comprenant
une première source de lumière (5) comportant une première lentille (7) disposée pour créer un motif d'éclairage sous la forme d'un cadre (9 ; 10), et
une seconde source de lumière (6) comportant une seconde lentille (8) disposée pour créer un motif d'éclairage (11) remplissant l'espace intérieur du cadre,
où l'intensité de sortie de la première et de la deuxième source de lumière (5, 6) peut être commandée individuellement.

2. Caméra de surveillance selon la revendication 1, où le dispositif d'éclairage (4) est disposé pour fournir un éclairage sensiblement uniforme d'un objet (3).

3. Caméra de surveillance selon la revendication 1 ou 2, où la première lentille (7) est disposée pour créer un motif d'éclairage en forme d'anneau (10).

4. Caméra de surveillance selon la revendication 1 ou 2, où la première lentille (7) est disposée pour créer un motif d'éclairage en forme de cadre rectangulaire.

5. Caméra de surveillance selon l'une quelconque des revendications précédentes, où la première et la deuxième source de lumière (5, 6) comprennent chacune une DEL.

6. Caméra de surveillance selon l'une quelconque des revendications précédentes, où la première et la deuxième source de lumière (5, 6) sont adaptées pour émettre un rayonnement infrarouge.

7. Caméra de surveillance selon l'une quelconque des revendications précédentes, où le dispositif d'éclairage (4) est disposé pour recevoir une valeur de zoom de la caméra (1) et pour utiliser la valeur de zoom reçue pour commander l'intensité de sortie de la première et de la seconde source de lumière (5, 6), de telle sorte qu'on obtient un éclairage essentiellement uniforme d'un objet à une certaine distance de la caméra (1) correspondant à la valeur de zoom.

8. Caméra de surveillance selon l'une quelconque des revendications 1 à 6, où le dispositif d'éclairage (4) est relié à une interface d'entrée utilisateur et est disposé pour recevoir une troisième distance à partir de l'interface d'entrée utilisateur et pour utiliser la troisième distance pour commander l'intensité de sortie de la première et de la seconde source de lumière (5, 6), de telle sorte que pour l'essentiel il est prévu un éclairage uniforme d'un objet à la troisième distance de la caméra.

9. Caméra de surveillance selon l'une quelconque des revendications 1 à 8, où le dispositif d'éclairage est disposé pour recevoir, de la caméra (1), une information concernant une intensité réelle de la lumière à une quatrième distance du dispositif d'éclairage (4), ainsi que des informations relative à une intensité de lumière souhaitée à la quatrième distance et, sur la base de l'information reçue, à adapter l'intensité de sortie des sources de lumière (5, 6).
